# EUROPÄISCHE PATENTSCHRIFT

(11) **EP 3 528 624 B1**
(45) Veröffentlichungstag und Bekanntmachung des Hinweises auf die Patenterteilung: **07.06.2023**
(21) Anmeldenummer: 17783428.0
(22) Anmeldetag: 03.10.2017
(51) Int. Cl.: A01M 23/02, A01M 23/24

(54) **WÜHLERFANGBEHÄLTER**
COLLECTING CONTAINER FOR BURROWING ANIMALS
PIÈGE À RONGEUR

(30) Priorität: 20.10.2016 AT 509552016
(43) Veröffentlichungstag der Anmeldung: 28.08.2019
(73) Patentinhaber: Bscheiden, Manfred, 8330 Feldbach (AT)
(72) Erfinder: Bscheiden, Manfred, 8330 Feldbach (AT)
(74) Vertreter: Gibler & Poth Patentanwälte KG
(86) Internationale Anmeldenummer: PCT/EP2017/075033
(87) Internationale Veröffentlichungsnummer: WO 2018/072990

(56) Entgegenhaltungen:
- CH-A5- 694 312
- DE-U1-212005 000 018
- GB-A- 189 178
- US-A- 866 987
- US-A- 2 524 423

## Beschreibung

Die Erfindung betrifft einen Wühlerfangbehälter gemäß dem Gattungsbegriff des Patentanspruches 1.

Es sind zahlreiche Konzepte für Fallen zum Fang bzw. zum Töten wühlender Wirbeltiere, wie insbesondere Wühlmäusen, Maulwürfen und diverser Ratten bekannt. Bislang ist jedoch keine Falle bekannt, welche einfach und unkompliziert in deren Handhabung und gleichzeitig wirkungsvoll beim Fang von Wühlern ist. Beispielsweise sind Fallen bekannt, welche direkt in einen unterirdischen Gang eingebaut werden müssen, wozu erheblicher Aufwand betrieben werden muss. Da die betreffenden Zielobjekte eine gewisse Intelligenz aufweisen, nehmen diese derartige Fallen oftmals gar nicht an, sondern umgraben diese. Fallen, welche hingegen außerhalb der Wühlgänge aufgestellt werden, werden oftmals seitens der betreffenden Zielobjekte gänzlich gemieden, da diese außerhalb deren natürlichen Lebensumgebung angeordnet sind. Da Wühler einen gegenüber Hausmäusen deutlich kräftigeren Körper aufweisen, sind entsprechend letale Fallen für Wühler in deren Handhabung gefährlicher als vergleichbare Mausefallen für Hausmäuse. Deren Betrieb außerhalb der Wühlgänge führt daher zu einem erheblichen Verletzungsrisiko für Kinder sowie Haustiere, insbesondere Hunde und Katzen.

Die US 866 987 A zeigt eine Falle für Tiere, die ein Gehäuse aus Draht, eine Glaswand, eine Öffnung im Boden, einen Köder an einer Auslösevorrichtung und eine bewegliche Verschlusseinrichtung zum Verschließen der Falle umfasst.

Die GB 189 178 A zeigt eine Falle für Nagetiere, insbesondere für Ratten, wobei die Falle wenigstens einen Futtertrog, eine beweglich angeordnete Rutsche und einen Container aufweist.

Die US 2 524 423 A zeigt eine Falle mit mehreren Kammern zum Fangen von Kleintieren wie beispielsweise Nagetieren, umfassend bewegliche Bodenteile, die in Tunnels angeordnet sind.

Die CH 694 312 A5 beschreibt einen Tierkäfig mit transparenten Wänden zur Haltung von insbesondere Nagetieren.

Die DE 21 2005 000018 U1 beschreibt einen Tierkäfig mit transparenten Wänden zur isolierten Unterbringung von insbesondere Labortieren.

Aufgabe der Erfindung ist es daher einen Wühlerfangbehälter der eingangs genannten Art anzugeben, mit welchem die genannten Nachteile vermieden werden können, und welcher einfach und sicher anwendbar ist, und welcher durch Wühler gut angenommen wird.

Erfindungsgemäß wird dies durch die Merkmale des Patentanspruches 1 erreicht.

Dadurch kann ein Wühlerfangbehälter geschaffen werden, welcher einfach anwendbar ist, indem dieser über bzw. auf eine Zugangsöffnung eines unterirdischen Wühlerbaus gestellt wird. Dabei ist es nicht erforderlich den Boden umzugraben, um die Fangbox einzusetzen. Dadurch kann die Bekämpfung der Wühler schnell erfolgen, da sich viele Menschen dagegen sträuben Löcher in deren Garten zu graben, was gegenständlich entfallen kann. Zudem muss man sich beim Aufstellen der Fangbox nicht schmutzig machen. Diese kann auch einfach, schnell und unkompliziert inspiziert werden.

Aufgrund der unkomplizierten Handhabe kommt der gegenständliche Wühlerfangbehälter schneller zum Einsatz als Behälter, die im Boden vergraben werden müssen. Aufgrund seiner Merkmale ist der gegenständliche Wühlerfangbehälter zudem wirksamer als bodenvergrabene Fallen. Im Zusammenspiel dieser beiden Wirkungen kann dadurch ein Wühlerbefall deutlich schneller und gleichzeitig sauberer und sicherer eingedämmt werden, als herkömmlich.

In dem Wühlerfangbehälter können nach Belieben eine oder mehrere Fallen zum Fang oder Töten eines Wühlers angeordnet werden. Da die betreffenden Fallen gänzlich von dem Wühlerfangbehälter umgeben sind, ist keine Gefährdung für andere Tiere oder Menschen gegeben. Durch die Anordnung der Zugangsöffnung an der Unterseite ist es selbst für kleinere Oberflächen bewohnende Haustiere, wie etwa Katzenbabys, unmöglich in den Wühlerfangbehälter zu gelangen.

Durch die Aufnahme von Wasser und dessen Abgabe in Form von Feuchtigkeit kann anschließend an den Ausgang des unterirdischen Ganges eine Umgebung geschaffen werden, welche hinsichtlich den Licht- aber vor allem den

Feuchtigkeitsverhältnissen denen des unterirdischen Ganges ähnelt, in welchem der Wühler lebt. Durch Verdunstungskälte entspricht auch die Temperatur im Fangbehälterinnenraum der Temperatur im unterirdischen Wühlgang des zu fangenden Wühlers. Aufgrund dieser Eigenschaften wechseln Wühler bereitwillig aus dem Wühlgang in den Wühlerfangbehälter, und können dort durch Fallen bzw. Tötungsvorrichtungen unschädlich gemacht werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform eines Wühlerfangbehälters im Aufriss mit Deckel in Schnittdarstellung;
Fig. 2 der Wühlerfangbehälter gemäß Fig. 1 ohne Deckel im Grundriss;
Fig. 3 der Wühlerfangbehälter gemäß Fig. 1 in axonometrischer Darstellung mit teilweise aufgebrochen dargestellten Elementen;
Fig. 4 eine Schnittdarstellung des Wühlerfangbehälters gemäß Fig. 1 in Betriebsanordnung auf einem Wühlgangausgang;
Fig. 5 eine zweite Ausführungsform eines Wühlerfangbehälters im Aufriss mit Deckel in Schnittdarstellung;
Fig. 6 der Wühlerfangbehälter gemäß Fig. 5 ohne Deckel im Grundriss;
Fig. 7 der Wühlerfangbehälter gemäß Fig. 5 in axonometrischer Darstellung mit teilweise aufgebrochen dargestellten Elementen; und
Fig. 8 eine Schnittdarstellung des Wühlerfangbehälters gemäß Fig. 5 in Betriebsanordnung auf einem Wühlgangausgang.

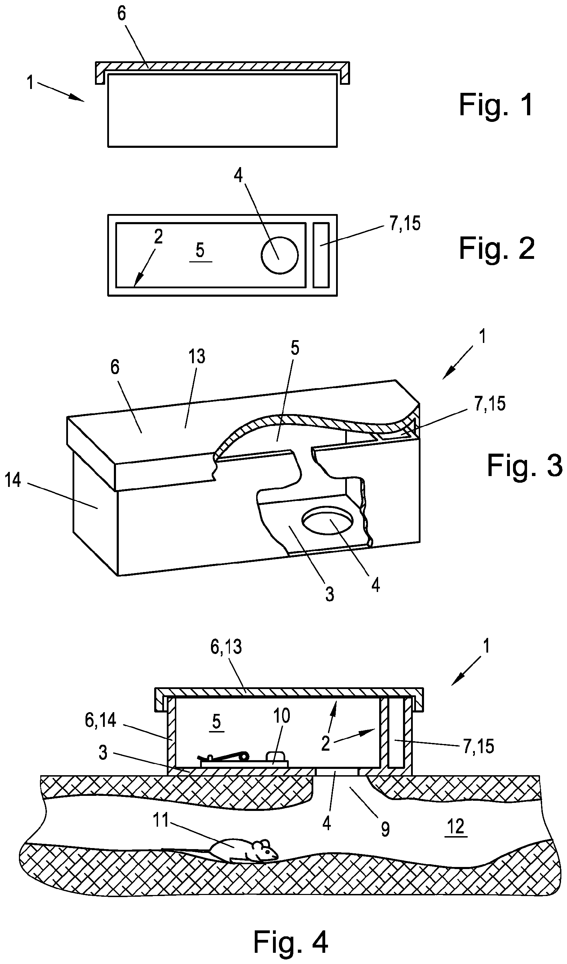

Die Fig. 1 bis 8 zeigen unterschiedliche Ansichten zweier besonders bevorzugter Ausführungsformen eines Wühlerfangbehälters 1, insbesondere einer Wühlmaus-Fangbox, wobei der Wühlerfangbehälter 1 einen Aufstellboden 3 mit einer Wühlerzugangsöffnung 4 aufweist, wobei der Wühlerfangbehälter 1 wenigstens eine, an den Aufstellboden 3 anschließende Hülle 6 aufweist, wobei die Hülle 6 zusammen mit dem Aufstellboden 3 einen Fangbehälterinnenraum 5 des Wühlerfangbehälters 1 umschließt, wobei der Wühlerfangbehälter 1 einen Wasserspeicher 15 aufweist, wobei wenigstens eine Innenfläche 2 des Wühlerfangbehälters 1 wenigstens bereichsweise zur Feuchtigkeitsabgabe an den Fangbehälterinnenraum 5 ausgebildet und mit dem Wasserspeicher 15 verbunden ist.

Dadurch kann ein Wühlerfangbehälter 1 geschaffen werden, welcher einfach anwendbar ist, indem dieser über bzw. auf eine Zugangsöffnung bzw. Wühlgangausgangs 9 eines unterirdischen Wühlerbaus bzw. Wühlganges 12 gestellt wird. In dem Wühlerfangbehälter 1 können nach Belieben eine oder mehrere Fallen 10 zum Fang oder Töten eines Wühlers 11 angeordnet werden. Da die betreffenden Fallen 10 gänzlich von dem Wühlerfangbehälter 1 umgeben sind, ist keine Gefährdung für andere Tiere oder Menschen gegeben. Durch die Anordnung der Zugangsöffnung 4 an der Unterseite ist es selbst für kleinere, die Oberfläche bewohnende Haustiere, wie etwa Katzenbabys, unmöglich in den Wühlerfangbehälter 1 zu gelangen.

Durch die Aufnahme von Wasser und dessen Abgabe in Form von Feuchtigkeit an den Fangbehälterinnenraum 5 kann anschließend an den Wühlgangausgang 9 des unterirdischen Wühlganges 12 eine Umgebung geschaffen werden, welche hinsichtlich den Licht- aber vor allem den Feuchtigkeitsverhältnissen denen des unterirdischen Wühlganges 12 ähnelt, in welchem der Wühler 11 lebt. Durch Verdunstungskälte entspricht auch die Temperatur im Fangbehälterinnenraum 5 etwa der Temperatur im unterirdischen Wühlgang 12 des zu fangenden Wühlers 11. Aufgrund dieser Eigenschaften wechseln Wühler 11 bereitwillig aus dem Wühlgang 12 in den Wühlerfangbehälter 1, und können dort durch Fallen 10 bzw. Tötungsvorrichtungen unschädlich gemacht werden.

Die gegenständliche Vorrichtung ist ein Behälter, welcher auch als Schachtel oder Kasten bezeichnet werden kann, und welcher zum Fang von Wühlern 11 vorgesehen ist. Unter "Fang" kann dabei sowohl der Lebendfang als auch das Töten der betreffende Tiere verstanden werden. Dabei kann der Wühlerfangbehälter 1 lediglich als Aufstellungsort für eine oder mehrere Fallen 10 dienen, oder aber selbst die Falle 10 bzw. ein funktionaler Teil einer solchen sein.

Als Wühler 11 werden dabei, wie an sich üblich, unter der Erde in Gängen bzw. Wühlgängen 12 lebende Nagetiere verstanden. Insbesondere betrifft die gegenständliche Erfindung den Fang unterschiedlicher Arten von Wühlmäusen. Der gegenständliche Wühlerfangbehälter kann jedoch auch zum Fang anderer Wühler 11 verwendet werden. Besonders bevorzugt kann der Wühlerfangbehälter 1 auch als Wühlmaus-Fangbox bezeichnet werden.

Wühler 11 leben in Wühlgängen 12 unter der Erde bzw. unterhalb einer Bodenoberfläche 8 im darunter liegenden Erdreich. Diese Wühlgänge 12 weisen Zugänge zur Bodenoberfläche 8 auf, welche gegenständlich als Wühlgangausgang 9 bezeichnet werden. Der Wühlerfangbehälter 1 ist dazu vorgesehen und entsprechend ausgebildet auf den Wühlgangausgang 9 gestellt zu werden. Es ist nicht vorgesehen, den Wühlerfangbehälter 1 einzugraben, und damit einen Teil des Wühlganges 12 zu ersetzen.

Der Wühlerfangbehälter 1 weist einen Aufstellboden 3 auf, um diesen auf der Bodenoberfläche 8 ab- bzw. aufstellen zu können. Als Aufstellboden 3 wird dabei nicht nur die - in Betriebslage - untere Außenfläche bezeichnet, sondern die gesamte untere Wand bzw. Platte. Der Aufstellboden 3 kann auch als Bodenplatte bezeichnet werden. Im Aufstellboden 3 ist eine Wühlerzugangsöffnung 4 angeordnet bzw. ausgebildet. Die betreffende Öffnung ist hinsichtlich deren Abmessungen an die Zielobjekte anzupassen. Je nach Art bzw. Gattung des Wühlers 11, zu dessen Fang der Wühlerfangbehälter 1 ausgebildet werden soll, sind entsprechende Abmessungen zu wählen, um den Eintritt des Wühlers 11 in den Wühlerfangbehälter 1 zu ermöglichen, welcher für diesen ausschließlich von unten durch den Boden erfolgen kann. Besonders bevorzugt weist die Wühlerzugangsöffnung 4 einen im Wesentlichen kreisrunden Querschnitt mit einem Durchmesser entsprechend dem größten zu erwartenden Kopfdurchmesser der Art auf, zu deren Fang der Wühlerfangbehälter 1 vorgesehen ist, wobei ein derartiger Wühlerfangbehälter 1 selbstverständlich auch für den Fang kleiner Arten geeignet ist.

Der Wühlerfangbehälter 1 weist weiters eine Hülle 6 auf. Die Hülle 6 schließt an den Aufstellboden 3 an. Der Aufstellboden 3 und die Hülle 6 umschließen einen Fangbehälterinnenraum 5 des Wühlerfangbehälters 1. Dabei ist besonders bevorzugt vorgesehen, dass die Hülle 6 und der Aufstellboden 3 den Fangbehälterinnenraum 5 - bis auf die Wühlerzugangsöffnung 4 - vollständig, insbesondere im Wesentlichen lichtdicht, umschließen.

Der Wühlerfangbehälter 1 besteht wenigstens aus zwei Teilen, nämlich dem Aufstellboden 3 und der Hülle 6. Die Hülle 6 umfasst wenigstens einen abnehmbaren Deckel 13 des Wühlerfangbehälters 1, um Zugang zum Inneren des Wühlerfangbehälters 1 zu ermöglichen.

Bevorzugt ist der Wühlerfangbehälter 1 quaderförmig bzw. schachtelförmig ausgebildet, wie in den Fig. 1 bis 8 dargestellt, wobei jedoch auch abweichende geometrische Formen vorgesehen sein können. Vor allem durch rotationssymmetrische, vasenartige oder skulpturale Ausgestaltungen können so Wühlerfangbehälter 1 geschaffen werden, welche sich unauffällig und harmonisch in die Gartengestaltung einfügen lassen.

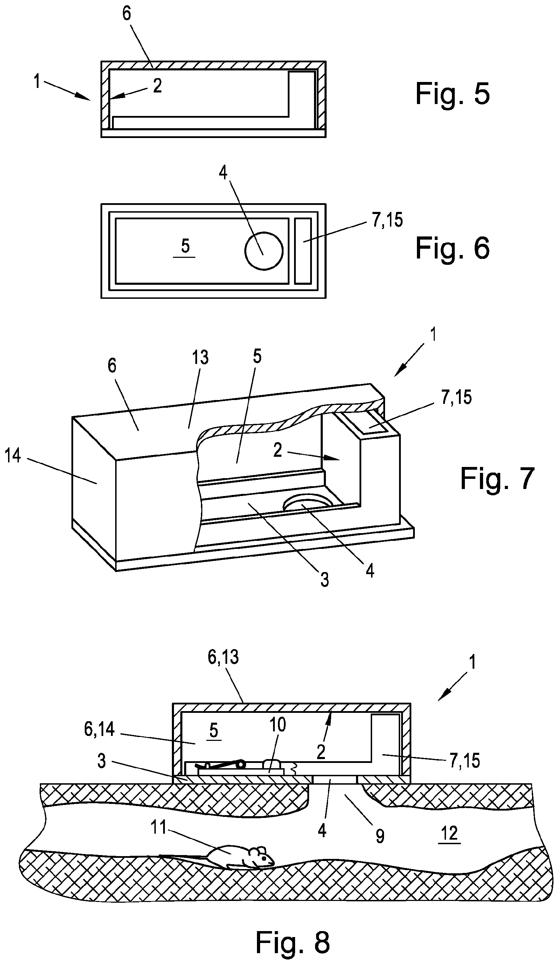

Der Wühlerfangbehälter 1 weist bevorzugt Seitenwände 14 auf. Diese werden funktional als Teil der Hülle 6 betrachtet. Dabei kann vorgesehen sein, dass die Seitenwände 14 entweder, wie bei der ersten Ausführungsform gemäß den Fig. 1 bis 4, mit dem Aufstellboden 3 verbunden bzw. einstückig ausgeführt sind. Es kann aber auch vorgesehen sein, dass die Seitenwände 14 mit dem Deckel 13 verbunden bzw. einstückig ausgeführt sind, wie bei der zweiten Ausführungsform gemäß den Fig. 5 bis 8. Gemäß einer dritten, nicht dargestellten Ausführungsform ist vorgesehen, dass die Seitenwände 14 als eigenständiges, rahmenartiges Teil ausgebildet sind, und auf den Aufstellboden aufgestellt werden, und wiederum den abnehmbaren Deckel 13 aufnehmen. Derartig ausgebildete Wühlerfangbehälter 1 sind besonders einfach von den sterblichen Überresten erfolgreich getöteter Ziellebewesen zu säubern.

Wie bereits dargelegt, ist der Wühlerfangbehälter 1 zur äußeren Anordnung auf einer Bodenoberfläche 8 vorgesehen, wobei die im Aufstellboden 3 angeordnete Wühlerzugangsöffnung 4 einen Zugang in den Fangbehälterinnenraum 5 aus einem an der Bodenoberfläche 8 mündenden Wühlgangausgang 9 ermöglicht. Der Zugang durch den Boden ist dabei bevorzugt der einzige Zugang in den Fangbehälterinnenraum 5 für ein Kleinlebewesen. Bevorzugt ist der Deckel 13 entsprechend schwer bzw. verschließbar auszubilden, um einen ungewollten bzw. unbefugten Zugang zum Fangbehälterinnenraum 5 zu verhindern.

Bevorzugt ist vorgesehen, dass im Fangbehälterinnenraum 5 wenigstens eine Wühlerfalle 10 angeordnet ist, wie dies in den Fig. 4 und 8 schematisch dargestellt ist. Dabei kann es sich um unterschiedliche Fallen handeln, wie etwa um herkömmliche Schlagfallen, oder um Klappmechanismen für Lebendfallen.

Es kann weiters vorgesehen sein, dass der Wühlerfangbehälter 1 selbst bzw. als Ganzes als Wühlerfalle 10 ausgebildet ist. Dabei ist vorgesehen, dass der Wühlerfangbehälter 1 einen Verschlussmechanismus zum vorgebbaren Verschluss der Wühlerzugangsöffnung 4 nach Auslösung des Verschlussmechanismus durch einen Wühler 11 aufweist.

Der Wühlerfangbehälter 1 weist einen Wasserspeicher 15 auf. Gemäß den beiden in den Fig. 1 bis 8 dargestellten Ausführungsformen ist jeweils vorgesehen, dass der Wasserspeicher 15 als Wasserbehälter 7 ausgebildet ist. Alternativ hiezu kann vorgesehen sein, dass der Aufstellboden 3 und/oder die Hülle 6 selbst als Wasserspeicher 15 ausgebildet sind, indem diese aus entsprechend saugfähigem Material ausgebildet sind, welches vor dem Einsatz ausreichende Zeit in Wasser eingeweicht wird, vergleichbar etwa einem sog. Römertopf.

Gemäß der ersten und zweiten Ausführungsform ist vorgesehen, dass der Wasserbehälter 7 auf dem Aufstellboden 3 angeordnet ist. Dadurch kann eine Verschmutzung des Wassers und des Wasserbehälters 7 verhindert werden. Zudem hilft dies die eigentliche Funktion des Wühlerfangbehälters 1 zu verschleiern. Es kann aber auch vorgesehen sein, den Wasserbehälter 7 in den Deckel 13 zu integrieren. Der Wasserbehälter 7 hat gegenüber der Speicherung von Wasser einzig im Material der Hülle 6 bzw. des Aufstellbodens 3 den Vorteil höherer Wasseraufnahme sowie der schnelleren Einsetzbarkeit. Vor allem bei hohen Temperaturen bzw. direkter Sonneneinstrahlung auf den Wühlerfangbehälter 1 ist dies von Vorteil.

Der Wasserspeicher 15 ist mit dem Fangbehälterinnenraum 5 verbunden, und zwar mittels einer Innenfläche 2, welche zur Feuchtigkeitsabgabe ausgebildet ist bzw. diese Fähigkeit aufweist. Die wenigstens eine Innenfläche 2 kann dabei jede Fläche sein, die innerhalb bzw. angrenzend an den Fangbehälterinnenraum 5 angeordnet bzw. ausgebildet ist. Bevorzugt ist die wenigstens eine Innenfläche 2 Teil des Aufstellbodens 3 und/oder der Hülle 6. Besonders bevorzugt ist die wenigstens eine Innenfläche 2 wenigstens bereichsweise Teil des Wasserbehälters 7.

Die an der bzw. den Innenflächen 2 abgegebene bzw. in den Seitenwänden 15 stehende Feuchtigkeit verursacht ein Raumklima ähnlich dem in einem Wühlgang 12. Die Innenflächen 2 müssen daher jedenfalls einen erheblichen Bereich aufweisen, welcher eine Verdunstung bzw. einen partiellen Wasseraustritt ermöglicht. Die Innenflächen 2 sind daher jedenfalls nicht vollständig glasiert, emailliert oder mit Metall oder Kunststoff beschichtet sein.

Besonders bevorzugt ist vorgesehen nicht nur einen Teil der Hülle 6 bzw. des Aufstellbodens 3 entsprechend auszubilden, dass diese jeweils im Wesentlichen homogen ausgebildet sind. Dies vereinfacht die Ausführung und Herstellung.

Bevorzugt ist vorgesehen, dass der Aufstellboden 3 und/oder die Hülle 6 aus einem Material mit wenigstens bereichsweise offenporiger und/oder poröser Struktur ausgebildet sind. Durch die offenen Poren ist ein entsprechender Flüssigkeitstransport innerhalb des Aufstellbodens 3 bzw. der Hülle 6 ermöglicht.

Weiters ist bevorzugt vorgesehen, dass das Material aus dem der Aufstellboden 3 und/oder die Hülle 6 wenigstens bereichsweise, insbesondere vollständig, ausgebildet sind, ein saugendes Material ist. Dabei ist insbesondere vorgesehen, dass das Material einen Wasseraufnahmekoeffizienten größer 3 kg/m²h^{0,5} aufweist.

Gemäß den besonders bevorzugten Ausführungsformen ist vorgesehen, dass der Aufstellboden 3 und/oder die Hülle 6 aus gebranntem Ton und/oder tonhaltigem Lehm ausgebildet sind. Dadurch kann sowohl eine einfache Herstellung ermöglicht werden, ebenso wie ein guter Feuchtigkeitstransport innerhalb der Hülle 6 bzw. des Aufstellbodens 3. Ein weiterer Vorteil dieser Ausführung ist weiters die hohe Masse des Wühlerfangbehälters 1 aufgrund der verwendeten Werkstoffe und typischen Wandstärken, welche Masse hilft die Position des Wühlerfangbehälters 1 zu sichern.

Besonders bevorzugt ist dabei selbstverständlich vorgesehen, dass auch der bevorzugt diskret ausgebildete Wasserbehälter 7 aus diesem Werkstoff einstückig mit Hülle 6 bzw. Aufstellboden 3 ausgebildet ist.

Neben gebranntem Ton und/oder tonhaltigem Lehm kann der Wühlerfangbehälter 1 auch aus Naturstein, insbesondere als Sandstein, insbesondere Kalksandstein, hergestellt werden. Alternativ kann weiters vorgesehen sein, Teile des Wühlerfangbehälters 1 aus Kunststoff und/oder Metall zu bilden, und jeweils entsprechend geeignete Verdunstungseinsätze an den Innenwänden vorzusehen, welche mit einem entsprechend porösen bzw. kapillaren Werkstoff mit dem Wasserspeicher 15 verbunden sind. Dabei ist darauf zu achten, dass der Wühlerfangbehälter 1 nicht zu dicht wird, um Kondensation an den Innenflächen gering zu halten bzw. zu vermeiden.

## Patentansprüche

1. Wühlerfangbehälter (1), insbesondere Wühlmaus-Fangbox, wobei der Wühlerfangbehälter (1) einen Aufstellboden (3) aufweist, wobei der Wühlerfangbehälter (1) wenigstens eine, an den Aufstellboden (3) anschließende Hülle (6) aufweist, wobei die Hülle (6) zusammen mit dem Aufstellboden (3) einen Fangbehälterinnenraum (5) des Wühlerfangbehälters (1) umschließt, wobei in dem Aufstellboden eine Wühlerzugangsöffnung (4) angeordnet ist, **dadurch gekennzeichnet, dass** die Hülle (6) und der Aufstellboden (3) den Fangbehälterinnenraum (5) bis auf die Wühlerzugangsöffnung (4) vollständig im Wesentlichen lichtdicht umschließen, dass der Wühlerfangbehälter (1) einen Wasserspeicher (15) aufweist, dass wenigstens eine Innenfläche (2) des Wühlerfangbehälters (1) wenigstens bereichsweise zur Feuchtigkeitsabgabe an den Fangbehälterinnenraum (5) ausgebildet und mit dem Wasserspeicher (15) verbunden ist.

2. Wühlerfangbehälter (1) nach Anspruch 1, **dadurch gekennzeichnet, dass** die Hülle (6) einen abnehmbaren Deckel umfasst.

3. Wühlerfangbehälter (1) nach einem der Ansprüche 1 oder 2, **dadurch gekennzeichnet, dass** der Wasserspeicher (15) als Wasserbehälter (7) ausgebildet ist.

4. Wühlerfangbehälter (1) nach Anspruch 3, **dadurch gekennzeichnet, dass** der Wasserbehälter (7) auf dem Aufstellboden (3) angeordnet ist.

5. Wühlerfangbehälter (1) nach Anspruch 3 oder 4, **dadurch gekennzeichnet, dass** Innenfläche (2) wenigstens bereichsweise Teil des Wasserbehälters (7) ist.

6. Wühlerfangbehälter (1) nach einem der Ansprüche 1 bis 5, **dadurch gekennzeichnet, dass** der Wühlerfangbehälter (1) zur äußeren Anordnung auf einer Bodenoberfläche (8) vorgesehen ist, und dass die im Aufstellboden (3) angeordnete Wühlerzugangsöffnung (4) einen Zugang in den Fangbehälterinnenraum (5) aus einem an der Bodenoberfläche (8) mündenden Wühlgangausgang (9) ermöglicht.

7. Wühlerfangbehälter (1) nach einem der Ansprüche 1 bis 6, **dadurch gekennzeichnet, dass** im Fangbehälterinnenraum (5) wenigstens eine Wühlerfalle (10) angeordnet ist.

8. Wühlerfangbehälter (1) nach einem der Ansprüche 1 bis 7, **dadurch gekennzeichnet, dass** der Wühlerfangbehälter (1) einen Verschlussmechanismus zum vorgebbaren Verschluss der Wühlerzugangsöffnung (4) nach Auslösung des Verschlussmechanismus durch einen Wühler (11) aufweist.

9. Wühlerfangbehälter (1) nach einem der Ansprüche 1 bis 8, **dadurch gekennzeichnet, dass** der Aufstellboden (3) und/oder die Hülle (6) im Wesentlichen homogen ausgebildet sind.

10. Wühlerfangbehälter (1) nach einem der Ansprüche 1 bis 9, **dadurch gekennzeichnet, dass** der Aufstellboden (3) und/oder die Hülle (6) selbst als Wasserspeicher (15) ausgebildet sind.

11. Wühlerfangbehälter (1) nach einem der Ansprüche 1 bis 10, **dadurch gekennzeichnet, dass** der Aufstellboden (3) und/oder die Hülle (6) aus einem Material mit wenigstens bereichsweise offenporiger und/oder poröser Struktur ausgebildet sind.

12. Wühlerfangbehälter (1) nach einem der Ansprüche 1 bis 11, **dadurch gekennzeichnet, dass** der Aufstellboden (3) und/oder die Hülle (6) aus einem Material mit einem Wasseraufnahmekoeffizienten größer 3 kg/m²h^{0,5} ausgebildet sind.

13. Wühlerfangbehälter (1) nach einem der Ansprüche 1 bis 12, **dadurch gekennzeichnet, dass** der Aufstellboden (3) und/oder die Hülle (6) aus gebranntem Ton und/oder tonhaltigem Lehm ausgebildet sind.

## Claims

1. Collecting container for burrowing animals (1), in particular a vole collecting box, wherein the collecting container for burrowing animals (1) has a standing base (3), wherein the collecting container for burrowing animals (1) has at least one casing (6) adjoining the standing base (3), wherein the casing (6) together with the standing base (3) encloses a collecting container interior (5) of the collecting container for burrowing animals (1), wherein an access opening (4) for burrowing animals is arranged in the standing base, **characterized in that** the casing (6) and the standing base (3) enclose the collecting container interior (5) in a substantially light-tight manner except for the access opening (4) for burrowing animals, **in that** the collecting container for burrowing animals (1) has a water reservoir (15), **in that** at least one inner surface (2) of the collecting container for burrowing animals (1) is designed, at least in regions, for moisture release to the collecting container interior (5) and is connected to the water reservoir (15).

2. Collecting container for burrowing animals (1) according to claim 1, **characterized in that** the cover (6) comprises a removable lid.

3. Collecting container for burrowing animals (1) according to one of claims 1 or 2, **characterized in that** the water reservoir (15) is designed as a water container (7).

4. Collecting container for burrowing animals (1) according to claim 3, **characterized in that** the water container (7) is arranged on the standing base (3).

5. Collecting container for burrowing animals (1) according to claim 3 or 4, **characterized in that** the inner surface (2) is at least partially part of the water container (7).

6. Collecting container for burrowing animals (1) according to one of the claims 1 to 5, **characterized in that** the collecting container for burrowing animals (1) is provided for external arrangement on a ground surface (8), and **in that** the access opening (4) for burrowing animals arranged in the standing base (3) allows access into the collecting container interior (5) from a burrowing passage outlet (9) opening at the ground surface (8).

7. Collecting container for burrowing animals (1) according to one of claims 1 to 6, **characterized in that** at least one trap for burrowing animals (10) is arranged in the collecting container interior (5).

8. Collecting container for burrowing animals (1) according to one of the claims 1 to 7, **characterized in that** the collecting container for burrowing animals (1) comprises a closing mechanism for the predeterminable closing of the access opening (4) for burrowing animals after the closing mechanism has been triggered by a burrowing animal (11).

9. Collecting container for burrowing animals (1) according to one of claims 1 to 8, **characterized in that** the standing base (3) and/or the casing (6) are of substantially homogeneous design.

10. Collecting container for burrowing animals (1) according to one of the claims 1 to 9, **characterized in that** the standing base (3) and/or the casing (6) itself are designed as a water reservoir (15).

11. Collecting container for burrowing animals (1) according to one of claims 1 to 10, **characterized in that** the standing base (3) and/or the casing (6) are made of a material with an open-pored and/or porous structure at least in some sections.

12. Collecting container for burrowing animals (1) according to one of claims 1 to 11, **characterized in that** the standing base (3) and/or the casing (6) are made of a material with a water absorption coefficient greater than 3 kg/m²h^{0.5}.

13. Collecting container for burrowing animals (1) according to one of claims 1 to 12, **characterized in that** the standing base (3) and/or the casing (6) are made of baked clay and/or clayey loam.

## Revendications

1. Coffret pour la capture d'animaux fouisseurs (1), en particulier boîte pour la capture de campagnols, lequel coffret pour la capture d'animaux fouisseurs (1) présente un fond à poser (3), lequel coffret pour la capture d'animaux fouisseurs (1) comporte au moins une enveloppe (6) reliée au fond à poser (3), laquelle enveloppe (6) entoure avec le fond à poser (3) un espace intérieur (5) du coffret pour la capture d'animaux fouisseurs (1), dans lequel une ouverture d'accès des animaux fouisseurs (4) est disposée dans le fond à poser, **caractérisé en ce que** l'enveloppe (6) et le fond à poser (3) entourent complètement l'espace intérieur (5) de façon étanche à la lumière, sauf l'ouverture d'accès des animaux fouisseurs (4), **en ce que** le coffret pour la capture d'animaux fouisseurs (1) présente une réserve d'eau (15), **en ce qu'**au moins une surface intérieure (2) du coffret pour la capture d'animaux fouisseurs (1) est conçue au moins en partie pour laisser passer de l'humidité vers l'espace intérieur (5) et est reliée à la réserve d'eau (15).

2. Coffret pour la capture d'animaux fouisseurs (1) selon la revendication 1, **caractérisé en ce que** l'enveloppe (6) comprend un couvercle amovible.

3. Coffret pour la capture d'animaux fouisseurs (1) selon l'une des revendications 1 ou 2, **caractérisé en ce que** la réserve d'eau (15) est conformée comme un réservoir d'eau (7).

4. Coffret pour la capture d'animaux fouisseurs (1) selon la revendication 3, **caractérisé en ce que** le réservoir d'eau (7) est disposé sur le fond à poser (3).

5. Coffret pour la capture d'animaux fouisseurs (1) selon la revendication 3 ou 4, **caractérisé en ce que** la surface intérieure (2) fait au moins partiellement partie du réservoir d'eau (7).

6. Coffret pour la capture d'animaux fouisseurs (1) selon l'une des revendications 1 à 5, **caractérisé en ce que** le coffret pour la capture d'animaux fouisseurs (1) est conçu pour être disposé à l'extérieur sur une surface de sol (8) et **en ce que** l'ouverture d'accès des animaux fouisseurs (4) disposée dans le fond à poser (3) permet un accès à l'espace intérieur (5) à partir d'une sortie de galerie (9) débouchant dans la surface du sol (8).

7. Coffret pour la capture d'animaux fouisseurs (1) selon l'une des revendications 1 à 6, **caractérisé en ce qu'**au moins un piège à animaux fouisseurs (10) est disposé dans l'espace intérieur (5).

8. Coffret pour la capture d'animaux fouisseurs (1) selon l'une des revendications 1 à 7, **caractérisé en ce que** le coffret pour la capture d'animaux fouisseurs (1) comporte un mécanisme de fermeture pour fermer de façon pouvant être prédéterminée l'ouverture d'accès des animaux fouisseurs (4) après le déclenchement du mécanisme de fermeture par un animal fouisseur (11).

9. Coffret pour la capture d'animaux fouisseurs (1) selon l'une des revendications 1 à 8, **caractérisé en ce que** le fond à poser (3) et/ou l'enveloppe (6) ont une construction sensiblement homogène.

10. Coffret pour la capture d'animaux fouisseurs (1) selon l'une des revendications 1 à 9, **caractérisé en ce que** le fond à poser (3) et/ou l'enveloppe (6) elle-même sont conçus comme une réserve d'eau (15).

11. Coffret pour la capture d'animaux fouisseurs (1) selon l'une des revendications 1 à 10, **caractérisé en ce que** le fond à poser (3) et/ou l'enveloppe (6) sont faits d'un matériau ayant une structure à pores ouverts et/ou une structure poreuse au moins par zones.

12. Coffret pour la capture d'animaux fouisseurs (1) selon l'une des revendications 1 à 11, **caractérisé en ce que** le fond à poser (3) et/ou l'enveloppe (6) sont formés d'un matériau ayant un coefficient d'absorption d'eau supérieur à 3 kg/m²h^{0,5}.

13. Coffret pour la capture d'animaux fouisseurs (1) selon l'une des revendications 1 à 12, **caractérisé en ce que** le fond à poser (3) et/ou l'enveloppe (6) sont faits de terre cuite et/ou d'argile.
